(19) Europäisches Patentamt
European Patent Office
Office européen des brevets

(11) EP 4 133 001 B1

(12) EUROPEAN PATENT SPECIFICATION

(45) Date of publication and mention of the grant of the patent:
**04.09.2024 Bulletin 2024/36**

(21) Application number: **21722017.7**

(22) Date of filing: **05.04.2021**

(51) International Patent Classification (IPC):
***C08J 9/00*** *(2006.01)* ***C08L 23/16*** *(2006.01)*
***C08L 23/08*** *(2006.01)*

(52) Cooperative Patent Classification (CPC):
(C-Sets available)
**C08J 9/0061; C08L 23/0815; C08L 23/16;**
C08J 2201/026; C08J 2323/08; C08J 2323/16;
C08J 2423/08; C08J 2433/02; C08J 2433/14

(Cont.)

(86) International application number:
**PCT/US2021/025708**

(87) International publication number:
**WO 2021/207046 (14.10.2021 Gazette 2021/41)**

# (54) POLYMER COMPOSITIONS AND FOAMS COMPRISING POLYMER COMPOSITIONS

POLYMERZUSAMMENSETZUNGEN UND SCHAUMSTOFFE MIT POLYMERZUSAMMENSETZUNGEN

COMPOSITIONS DE POLYMÈRES ET MOUSSES COMPRENANT LES COMPOSITIONS DE POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2020 US 202063007034 P**

(43) Date of publication of application:
**15.02.2023 Bulletin 2023/07**

(73) Proprietor: **Dow Global Technologies LLC**
**Midland, MI 48674 (US)**

(72) Inventors:
- **JIANG, Xian**
  **Lake Jackson, Texas 77566 (US)**
- **MADENJIAN, Lisa S.**
  **Lake Jackson, Texas 77566 (US)**
- **VAN DUN, Jozef J.I.**
  **8810 Horgen (CH)**
- **DE GARAVILLA, James R.**
  **Orange, Texas 77630 (US)**

(74) Representative: **Boult Wade Tennant LLP**
**Salisbury Square House**
**8 Salisbury Square**
**London EC4Y 8AP (GB)**

(56) References cited:
**WO-A1-2017/000162 US-B1- 8 772 410**

EP 4 133 001 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 33/14, C08L 33/02;**
**C08L 23/16, C08L 33/14, C08L 33/02**

## Description

### CROSS REFERENCE TO RELATED APPLICATIONS

This application claims priority to U.S. Provisional Patent Application No. 63/007,034, filed on April 8, 2020.

### TECHNICAL FIELD

Embodiments of the present disclosure generally relate to polymer compositions, and more particularly to polymer compositions for use in foams.

### BACKGROUND

Polymer compositions are utilized in foams for various applications including athletic shoes and automotive applications. Conventional foams may contain base polymers such as ethyl vinyl acetate copolymers (EVA), polyolefin elastomers (POE), olefin block copolymers (OBC), ethylene-propylene-diene-monomer copolymers (EPDM).

### SUMMARY

Conventional foams may be formed from polyolefin elastomers, which typically are continuous phase materials that good for melt processibility. However, there is a desire for improved rheological, mechanical, and thermal properties. Thus, cross-linked thermoplastic materials are often utilized to add these properties; however, these cross-linked thermoplastics may require cross-linking agents to achieve desirable final foam properties, and these crosslinking agents often include peroxides, which are not environmentally friendly and require special treatment for transportation and storage. Accordingly, there are needs for polymer compositions that produce foams with improved elasticity and modulus properties, where the polymer compositions may include polyolefin elastomers, but may not require additional cross-linking agents.

Embodiments of the present disclosure meet those needs by providing a polymer composition, which includes at least 55 wt.%, based on the total weight of the polymer composition, of a polyolefin elastomer having an ethylene content of from greater than 50 wt.% to less than 80 wt.%; and a cross-linkable blend. The cross-linkable blend includes (i) from 1 wt.% to 99 wt.%, based on the total weight of the cross-linkable blend, of an E/X/Y polymer and (ii) from 1 wt.% to 99 wt.%, based on the total weight of the cross-linkable blend, of an epoxy-containing polymer. E is ethylene monomer; X is a monomer selected from the group consisting of $C_3$ to $C_8$ unsaturated carboxylic acids, esters of $C_3$ to $C_8$ unsaturated carboxylic acids, and anhydrides of $C_3$ to $C_8$ unsaturated carboxylic acids; and Y is an alkyl (meth)acrylate monomer. X is present in an amount of from 2 wt.% to 30 wt.%, based on the total amount of monomers present in the E/X/Y polymer. Y is present in an amount of from 0 wt.% to 40 wt.%, based on the total amount of monomers present in the E/X/Y polymer. The epoxy-containing polymer includes copolymerized monomers of ethylene, from 3 wt.% to 15 wt.%, based on the total amount of monomers present in the epoxy-containing polymer, of a monomer containing one or more epoxy groups, and from 0 wt.% to 40 wt.%, based on the total amount of monomers present in the epoxy-containing polymer, of an alkyl meth(acrylate) monomer.

These and other embodiments are described in more detail in the following Detailed Description.

### DETAILED DESCRIPTION

Specific embodiments of the present application will now be described. These embodiments are provided so that this disclosure will be thorough and complete and will fully convey the scope of the claimed subject matter to those skilled in the art.

Unless stated to the contrary, implicit from the context, or customary in the art, all parts and percent values are based on weight, all temperatures are in °C, and all test methods are current as of the filing date of this disclosure.

The term "polymer" refers to a polymeric compound prepared by polymerizing monomers, whether of a same or a different type. The generic term polymer thus embraces the term "homopolymer," which usually refers to a polymer prepared from only one type of monomer as well as "copolymer," which refers to a polymer prepared from two or more different monomers. The term "interpolymer," as used herein, refers to a polymer prepared by the polymerization of at least two different types of monomers. The generic term interpolymer thus includes a copolymer or polymer prepared from more than two different types of monomers, such as terpolymers.

"Polyolefin," "polyolefin polymer," "polyolefin resin," and like terms refer to a polymer produced from a simple olefin (also called an alkene with the general formula CnH2n) as a monomer. Polyethylene is produced by polymerizing ethylene with or without one or more comonomers, polypropylene by polymerizing propylene with or without one or more

comonomers. Thus, polyolefins include interpolymers such as ethylene-alpha-olefin copolymers and propylene-alpha-olefin copolymers.

"Polyethylene" or "ethylene-based polymer" refers to polymers comprising greater than 50% by mole of units derived from ethylene monomer. This includes ethylene-based homopolymers or copolymers (meaning units derived from two or more comonomers). Common forms of ethylene-based polymers known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

As used herein, an "elastomer" refers to a polymeric material that will substantially resume its original shape after being stretched.

"(Meth)acrylic acid" includes methacrylic acid and/or acrylic acid and "(meth)acrylate" includes methacrylate and/or acrylate.

The term "composition," as used herein, refers to a mixture of materials which comprises the composition, as well as reaction products and decomposition products formed from the materials of the composition.

"Blend," "polymer blend," and like terms refer to a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

"Foam" and like terms refer to a substance that is formed by trapping many gas bubbles in a liquid or solid.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Reference will now be made in detail to embodiments of a polymer composition as further described herein. In embodiments, the polymer composition may include a polyolefin elastomer and a cross-linkable blend comprising an E/X/Y polymer and an epoxy-containing polymer.

The polymer composition includes at least 55 weight percent (wt.%), based on the total weight of the polymer composition, of the polyolefin elastomer. In some embodiments, the polymer composition may include from 55 wt.% to 99 wt.%, from 55 wt.% to 90 wt.%, from 55 wt.% to 80 wt.%, from 55 wt.% to 70 wt.%, from 55 wt.% to 60 wt.%, from 60 wt.% to 99 wt.%, from 60 wt.% to about 90 wt.%, from 60 wt.% to 80 wt.%, from 60 wt.% to 70 wt.%, from 70 wt.% to 99 wt.%, from 70 wt.% to 90 wt.%, from 70 wt.% to 80 wt.%, from 80 wt.% to 99 wt.%, from 80 wt.% to 90 wt.%, or from 90 wt.% to 99 wt.% of the polyolefin elastomer based on the total weight of the polymer composition.

Embodiments of the polymer composition may include from 1 wt.% to 45 wt.%, based on the total weight of the polymer composition, of the cross-linkable blend comprising an E/X/Y polymer and an epoxy-containing polymer. In some embodiments, the polymer composition may include from 1 wt.% to 40 wt.%, from 1 wt.% to 30 wt.%, from 1 wt.% to 20 wt.%, from 1 wt.% to 10 wt.%, from 10 wt.% to 45 wt.%, from 10 wt.% to 40 wt.%, from 10 wt.% to 30 wt.%, from 10 wt.% to 20 wt.%, from 20 wt.% to 45 wt.%, from 20 wt.% to 40 wt.%, from 20 wt.% to 30 wt.%, from 30 wt.% to 45 wt.%, from 30 wt.% to 40 wt.%, or from 40 wt.% to 45 wt.% of the cross-linkable blend based on the total weight of the polymer composition.

Embodiments of the polymer composition may have a melt flow index ($I_2$) of less than 5 grams per ten minutes (g/10 min) when measured according to according to ASTM D1238 at 190°C, 2.16 kg. Without being bound by theory, compositions with an $I_2$ of greater than 5 may indicate that the polymer composition does not have sufficient crosslinking needed to produce foams with desirable properties. As such, in embodiments, the polymer compositions may be crosslinked. In embodiments, the polymer composition may have a melt flow index ($I_2$) of from 0.1 g/10 min to 5 g/10 min, from 0.1 g/10 min to 4 g/10 min, from 0.1 g/10 min to 3 g/10 min, from 0.1 g/10 min to 2 g/10 min, from 0.1 g/10 min to 1 g/10 min, from 1 g/10 min to 5 g/10 min, from 1 g/10 min to 4 g/10 min, from 1 g/10 min to 3 g/10 min, from 1 g/10 min to 2 g/10 min, from 2 g/10 min to 5 g/10 min, from 2 g/10 min to 4 g/10 min, from 2 g/10 min to 3 g/10 min, from 3 g/10 min to 5 g/10 min, from 3 g/10 min to 4 g/10 min, or from 4 g/10 min to 5 g/10 min when measured according to according to ASTM D1238 at 190°C, 2.16 kg.

Embodiments of the polymer composition may have a Mooney Viscosity ($ML_{1+4}$) of greater than 65 wherein Mooney Viscosity ($ML_{1+4}$) is measured according to ASTM D1646. In embodiments, the polymer composition may have a Mooney Viscosity ($ML_{1+4}$) of from 65 to 100, from 65 to 90, from 65 to 80, from 65 to 70, from 70 to 100, from 70 to

90, from 70 to 80, from 80 to 100, from 80 to 90, or from 90 to 100 wherein Mooney Viscosity ($ML_{1+4}$) is measured according to ASTM D1646.

Reference will now be made in detail to embodiments of the polyolefin elastomer of the polymer compositions described herein. As stated previously in this disclosure, an "elastomer" refers to a material that substantially resumes its original shape after being stretched. For instance, upon application of a stretching force, an elastomer is stretchable in at least one direction, such as the cross machine direction, and, upon release of the stretching force, contracts and returns to approximately its original dimension. For example, an example elastomer is a stretched material having a stretched length which is at least 50 % greater than its relaxed, unstretched length, and which will recover to within at least 50 % of its stretched length upon release of the stretching force. A hypothetical example would be a 2.5 cm (one (1) inch) sample of a material which is stretchable to at least 3.81 cm (1.50 inches) and which, upon release of the stretching force, will recover to a length of not more than 3.18 cm (1.25 inches).

As used herein, polyolefin elastomer means a copolymer comprised of at least 50 wt.% of ethylene and/or propylene derived units copolymerized with a different alpha olefin monomer unit selected from $C_2$-$C_{20}$ alpha olefins, for example, ethylene, 1-butene, 1-hexane, 4-methyl-1-pentene and/or 1-octene. The polymer compositions described herein include polyolefin elastomers that have an ethylene content of from greater than 50 wt.% to less than 80 wt.%. In embodiments, the polyolefin elastomers may have an ethylene content of from 50 wt.% to 70 wt.%, 50 wt.% to 60 wt.%, 60 wt.% to 80 wt.%, 60 wt.% to 70 wt.%, or 70 wt.% to 80 wt.%. Embodiments of the polymer compositions described herein may include polyolefin elastomers that have a comonomer content of at least 20 wt.%. In embodiments, the weight ratio of ethylene and/or propylene derived units to the different alpha olefin monomer unit selected from $C_2$-$C_{20}$ alpha olefins may be from 50:50 to 80:20, from 50:50 to 70:30, from 50:50 to 60:40, from 60:40 to 80:20, from 60:40 to 70:30, or from 70:30 to 80:20. The polyolefin elastomers may be polymerized using constrained geometry catalysts such as metallocene catalysts. The polyolefin elastomers may provide desirable properties, including electrical insulation, good long term chemical stability, as well as high strength, toughness and elasticity.

Embodiments of the polyolefin elastomers utilized in the polymer compositions described herein may have a melt index of less than 25 g/10 min, less than 15 g/10 min, or less than 10 g/10 min when measured according to ASTM D1238. Embodiments of the polyolefin elastomers utilized in the polymer compositions described herein may have a melt index of from 1 g/10 min to 25 g/10 min, 1 g/10 min to 15 g/10 min, 1 g/10 min to 10 g/10 min, 1 g/10 min to 5 g/10 min, 5 g/10 min to 25 g/10 min, 5 g/10 min to 15 g/10 min, 5 g/10 min to 10 g/10 min, 10 g/10 min to 25 g/10 min, 10 g/10 min to 15 g/10 min, 15 g/10 min to 25 g/10 min, when measured according to ASTM D1238.

Exemplary polyolefin elastomers may be obtained from The Dow Chemical Company of Midland, Mich. under the product name INFUSE™ 9507. In embodiments, polyolefin elastomers may include ethylene-propylene-diene terpolymer (EPDM), specifically a terpolymer product of ethylene, propylene and ENB. Further exemplary polyolefin elastomers may be obtained from The Dow Chemical Company of Midland, Mich. under the product name NORDEL™ 6565 XFC EPDM.

The polyolefin elastomer may have a density of less than 0.900 g/cc when measured according to ASTM D792. In embodiments, the polyolefin elastomer may have a density of from 0.800 g/cc to 0.900 g/cc, from 0.800 g/cc to 0.880 g/cc, from 0.800 g/cc to 0.860 g/cc, from 0.800 g/cc to 0.840 g/cc, from 0.800 g/cc to 0.820 g/cc, 0.820 g/cc to 0.900 g/cc, from 0.820 g/cc to 0.880 g/cc, from 0.820 g/cc to 0.860 g/cc, from 0.820 g/cc to 0.840 g/cc, 0.840 g/cc to 0.900 g/cc, from 0.840 g/cc to 0.880 g/cc, from 0.840 g/cc to 0.860 g/cc, 0.860 g/cc to 0.900 g/cc, from 0.860 g/cc to 0.880 g/cc, from 0.880 g/cc to 0.900 g/cc when measured according to ASTM D792.

Reference will now be made to embodiments of the cross-linkable blend, which includes an E/X/Y polymer and an epoxy-containing polymer. The reaction mechanism of the cross-linkable blend is provided as follows:

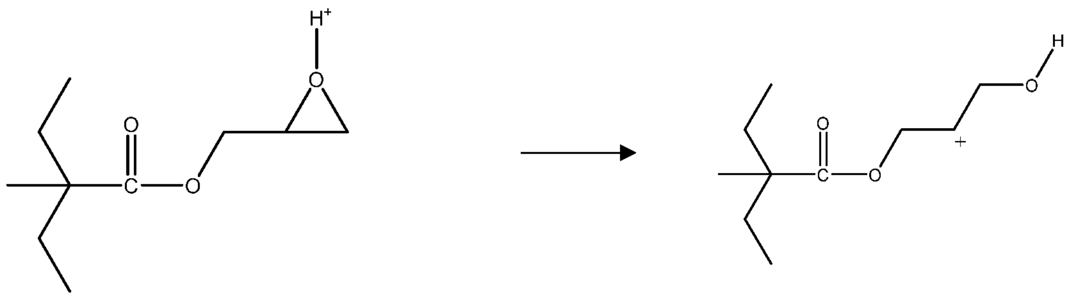

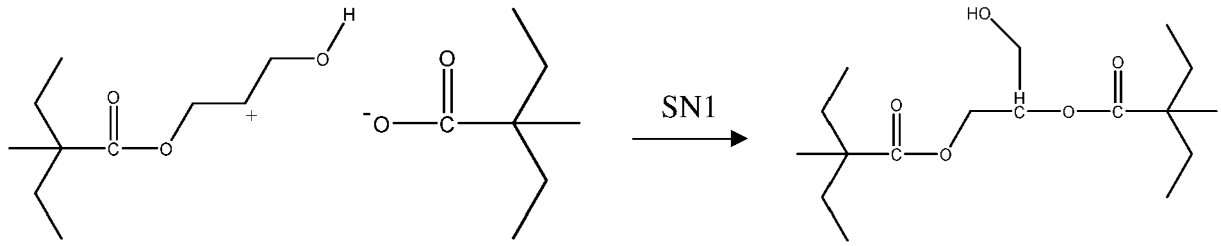


The E/X/Y polymer includes ethylene monomer, represented as E; a monomer, represented as X, selected from the group consisting of $C_3$ to $C_8$ unsaturated carboxylic acids, esters of $C_3$ to $C_8$ unsaturated carboxylic acids, and anhydrides of $C_3$ to $C_8$ unsaturated carboxylic acids; and an alkyl (meth)acrylate monomer, represented as Y. Examples of suitable unsaturated carboxylic acids having 3 to 8 carbon atoms may include acrylic acids, methacrylic acids, itaconic acids, maleic acids, fumaric acids, monomethyl maleic acids, and combinations of two or more of these acid comonomers. In some embodiments, the unsaturated carboxylic acids having 3 to 8 carbon atoms comprise acrylic acid and methacrylic acid. In other embodiments, the unsaturated carboxylic acids having 3 to 8 carbon atoms comprise acrylic acid. Alkyl (meth)acrylate monomers may include alkyl esters of methacrylic acid such as methyl methacrylate, ethyl methacrylate, propyl methacrylate, n-butyl methacrylate, n-hexyl methacrylate, 2-ethylhexyl methacrylate, n-octyl methacrylate, n-decyl methacrylate, and dodecyl methacrylate.

The E/X/Y polymer includes from 2 wt.% to 30 wt.%, from 2 wt.% to 20 wt.%, from 2 wt.% to 10 wt.%, from 10 wt.% to 30 wt.%, from 10 wt.% to 20 wt.%, or from 20 wt.% to 30 wt.% of X, based on the total amount of monomers present in the E/X/Y polymer. Y is optionally present in the E/X/Y polymer in an amount of from 0 wt.% to 40 wt.%, 0 wt.% to 30 wt.%, 0 wt.% to 20 wt.%, 0 wt.% to 10 wt.%, 5 wt.% to 40 wt.%, 5 wt.% to 30 wt.%, 5 wt.% to 20 wt.%, 5 wt.% to 10 wt.%, 10 wt.% to 40 wt.%, 10 wt.% to 30 wt.%, 10 wt.% to 20 wt.%, 20 wt.% to 40 wt.%, 20 wt.% to 30 wt.%, or 30 wt.% to 40 wt.%, based on the total amount of monomers present in the E/X/Y polymer. The balance of the E/X/Y polymer is E. The comonomer content may be measured using any suitable technique, such as techniques based on nuclear magnetic resonance ("NMR") spectroscopy, and, for example, by $^{13}C$ NMR analysis as described in U.S. Patent 7,498,282.

The E/X/Y polymer may have a melt index, $I_2$, of from about 1 g/10 min to about 500 g/10 min. The melt index, $I_2$, is determined according to ASTM D1238 at 190 °C, 2.16 kg. All individual values and subranges of 10 g/10 min to 100 g/10 min are included and disclosed herein. For examples, in some embodiments, the precursor acid copolymer may have a melt index, $I_2$, of from about 10 g/10 min to about 80 g/ 10 min, from about 10 g/10 min to about 60 g/10 min, from about 10 g/10 min to about 20 g/10 min, from about 20 g/10 min to about 100 g/10 min, from about 20 g/10 min to about 60 g/10 min, from 20 g/10 to 40 g/10 min, from 40 g/10 min to 100 g/10 min, from 40 g/10 min to 80 g/10 min, from 40 g/10 min to 60 g/10 min, from 60 g/10 min to 100 g/10 min, from 60 g/10 min to 80 g/10 min, or from 80 g/10 min to 100 g/10 min.

The E/X/Y polymer may be synthesized in a continuous process in which each of the reactive monomers and the solvent(s), if any, are continuously fed, together with initiator, into a stirred reactor. The choice of initiator is based on the anticipated reactor temperature range coupled with the decomposition temperature of the initiator, the criteria for this selection being well-understood in the industry. In general, during the synthesis by copolymerization of ethylene and acid comonomers to produce the E/X/Y polymer, the reaction temperature may be maintained at about 120 °C to about 300 °C, or about 140 °C to about 260 °C. The pressure in the reactor may be maintained at about 130 MPa to about 310 MPa, or about 165 MPa to 250 MPa.

The reactor may be, for example, an autoclave reactor, such as those described in U.S. Pat. No. 2,897,183, which describes a type of autoclave reactor that is equipped with means for intensive agitation. The patent also describes a continuous process for the polymerization of ethylene under a "substantially constant environment." This environment is maintained by keeping certain parameters, for example, pressure, temperature, initiator concentration, and the ratio of polymer product to unreacted ethylene, substantially constant during the polymerization reaction. Such conditions may be achieved in any of a variety of continuously stirred tank reactors, among them, for example, continuously stirred isothermal reactors and continuously stirred adiabatic reactors.

The reaction mixture, which contains the E/X/Y polymer, may be vigorously agitated and continuously removed from the autoclave. After the reaction mixture leaves the reaction vessel, the resulting E/X/Y polymer product may be separated from the volatile unreacted monomers and solvent(s), if any, by conventional procedures, such as by vaporizing the unpolymerized materials and solvent(s) under reduced pressure or at an elevated temperature..

The cross-linkable blend includes from 1 wt.% to 99 wt.% of the E/X/Y polymer, based on the total weight of the cross-linkable blend. In embodiments, the cross-linkable blend may include from 1 wt.% to 90 wt.%, 1 wt.% to 80 wt.%, 1 wt.% to 70 wt.%, 1 wt.% to 60 wt.%, 1 wt.% to 50 wt.%, 1 wt.% to 40 wt.%, 1 wt.% to 30 wt.%, 1 wt.% to 20 wt.%, 1 wt.% to 10 wt.%, 10 wt.% to 99 wt.%, 10 wt.% to 90 wt.%, 10 wt.% to 80 wt.%, 10 wt.% to 70 wt.%, 10 wt.% to

60 wt.%, 10 wt.% to 50 wt.%, 10 wt.% to 40 wt.%, 10 wt.% to 30 wt.%, 10 wt.% to 20 wt.%, 20 wt.% to 99 wt.%, 20 wt.% to 90 wt.%, 20 wt.% to 80 wt.%, 20 wt.% to 70 wt.%, 20 wt.% to 60 wt.%, 20 wt.% to 50 wt.%, 20 wt.% to 40 wt.%, 20 wt.% to 30 wt.%, 30 wt.% to 99 wt.%, 30 wt.% to 90 wt.%, 30 wt.% to 80 wt.%, 30 wt.% to 70 wt.%, 30 wt.% to 60 wt.%, 30 wt.% to 50 wt.%, 30 wt.% to 40 wt.%, 40 wt.% to 99 wt.%, 40 wt.% to 90 wt.%, 40 wt.% to 80 wt.%, 40 wt.% to 70 wt.%, 40 wt.% to 60 wt.%, 40 wt.% to 50 wt.%, from 50 wt.% to 99 wt.%, 50 wt.% to 90 wt.%, 50 wt.% to 80 wt.%, 50 wt.% to 70 wt.%, 50 wt.% to 60 wt.%, 60 wt.% to 99 wt.%, 60 wt.% to 90 wt.%, 60 wt.% to 80 wt.%, 60 wt.% to 70 wt.%, from 70 wt.% to 99 wt.%, 70 wt.% to 90 wt.%, 70 wt.% to 80 wt.%, 80 wt.% to 99 wt.%, 80 wt.% to 90 wt.%, or 90 wt.% to 99 wt.% of the E/X/Y polymer, based on the total weight of the cross-linkable blend.

As stated previously herein, the cross-linkable blend further includes an epoxy-containing polymer. In embodiments, the X monomer of the E/X/Y polymer may be cross-linked with one or more epoxy groups of the epoxy-containing polymer. Accordingly, embodiments of the polymer compositions described herein may not require an additional curing agent to crosslink the cross-linkable blend. In embodiments, the cross-linkable blend may be a crosslinked-blend. In the cross-linked blend, the X monomer of the E/X/Y polymer may be cross-linked with one or more epoxy groups of the epoxy-containing polymer.

The epoxy-containing polymer includes copolymerized monomers of ethylene, a monomer containing one or more epoxy groups, and an alkyl meth(acrylate) monomer. Suitable monomers containing one or more epoxy groups may include glycidyl acrylate and glycidyl methacrylate (GMA). Without being bound by theory, it is believed that the epoxy monomer present in the monomer containing one or more epoxy groups, for example in GMA, cross-links with the E/X/Y polymer to yield the cross-linked foam. In some embodiments, it is believed that the cross-linking between the GMA and the E/X/Y polymer enables the foam to be sufficiently crosslinked foam without the need for a peroxide crosslinker.

The epoxy-containing polymer may include from 3 wt.% to 15 wt.%, 3 wt.% to 10 wt.%, 3 wt.% to 5 wt.%, 5 wt.% to 15 wt.%, 5 wt.% to 10 wt.%, or 10 wt.% to 15 wt.% of the monomer containing one or more epoxy groups, based on the total amount of monomers present in the epoxy-containing polymer. The epoxy-containing polymer may include from 0 wt.% to 40 wt.%, 0 wt.% to 30 wt.%, 0 wt.% to 20 wt.%, 0 wt.% to 10 wt.%, 5 wt.% to 40 wt.%, 5 wt.% to 30 wt.%, 5 wt.% to 20 wt.%, 5 wt.% to 10 wt.%, 10 wt.%, to 40 wt.%, 10 wt.% to 30 wt.%, 10 wt.% to 20 wt.%, 20 wt.% to 40 wt.%, 20 wt.% to 30 wt.%, or 30 wt.% to 40 wt.% of the alkyl meth(acrylate) monomer, based on the total amount of monomers present in the epoxy-containing polymer. The comonomer content may be measured using any suitable technique, such as techniques based on nuclear magnetic resonance ("NMR") spectroscopy, and, for example, by 13C NMR analysis as described in U.S. Patent 7,498,282.

The cross-linkable blend includes from 1 wt.% to 99 wt.% of the epoxy-containing polymer, based on the total weight of the cross-linkable blend. In embodiments, the cross-linkable blend may include from 1 wt.% to 90 wt.%, 1 wt.% to 80 wt.%, 1 wt.% to 70 wt.%, 1 wt.% to 60 wt.%, 1 wt.% to 50 wt.%, 1 wt.% to 40 wt.%, 1 wt.% to 30 wt.%, 1 wt.% to 20 wt.%, 1 wt.% to 10 wt.%, 10 wt.% to 99 wt.%, 10 wt.% to 90 wt.%, 10 wt.% to 80 wt.%, 10 wt.% to 70 wt.%, 10 wt.% to 60 wt.%, 10 wt.% to 50 wt.%, 10 wt.% to 40 wt.%, 10 wt.% to 30 wt.%, 10 wt.% to 20 wt.%, 20 wt.% to 99 wt.%, 20 wt.% to 90 wt.%, 20 wt.% to 80 wt.%, 20 wt.% to 70 wt.%, 20 wt.% to 60 wt.%, 20 wt.% to 50 wt.%, 20 wt.% to 40 wt.%, 20 wt.% to 30 wt.%, 30 wt.% to 99 wt.%, 30 wt.% to 90 wt.%, 30 wt.% to 80 wt.%, 30 wt.% to 70 wt.%, 30 wt.% to 60 wt.%, 30 wt.% to 50 wt.%, 30 wt.% to 40 wt.%, 40 wt.% to 99 wt.%, 40 wt.% to 90 wt.%, 40 wt.% to 80 wt.%, 40 wt.% to 70 wt.%, 40 wt.% to 60 wt.%, 40 wt.% to 50 wt.%, from 50 wt.% to 99 wt.%, 50 wt.% to 90 wt.%, 50 wt.% to 80 wt.%, 50 wt.% to 70 wt.%, 50 wt.% to 60 wt.%, 60 wt.% to 99 wt.%, 60 wt.% to 90 wt.%, 60 wt.% to 80 wt.%, 60 wt.% to 70 wt.%, from 70 wt.% to 99 wt.%, 70 wt.% to 90 wt.%, 70 wt.% to 80 wt.%, 80 wt.% to 99 wt.%, 80 wt.% to 90 wt.%, or 90 wt.% to 99 wt.% of the epoxy-containing polymer, based on the total weight of the cross-linkable blend.

The polymer composition of any preceding claim, further comprising a compatibilizer or any other suitable additive known in the art. Additives may include plasticizers, processing aides, flow enhancing additives, flow reducing additives (e.g., organic peroxides), lubricants, pigments, dyes, optical brighteners, flame retardants, impact modifiers, nucleating agents, antiblocking agents (e.g., silica), thermal stabilizers, hindered amine light stabilizers (HALS), UV absorbers, UV stabilizers, dispersants, surfactants, chelating agents, coupling agents, adhesives, primers, reinforcement additives (e.g., glass fiber), and fillers, and mixtures or combinations of two or more conventional additives.

Foaming agents may include hydrocarbons, fluorocarbons, hydrofluorocarbons, hydrofluoroolefins, hydrochlorofluoroolefins, and other halogenated compounds. Other suitable chemical foaming agents can include, for example, sodium bicarbonate, ammonium bicarbonate, azodicarbonamide, dinitrosopentamethylenediamine, and sulfonyl hydrazides. Foaming agents such as water or carbon dioxide added as a gas or liquid, or generated in-situ by the reaction of water with polyisocyanate, may also be used. The foaming agents can be used in mixtures of two or more, and chemical and physical foaming agents can be used together to tailor expansion-decomposition temperature and foaming processes.

Embodiments of the polymer compositions described herein may further include free radical initiators or crosslinking agents, co-curing agents, activators, and any other type of additive typically used in similar compositions, including pigments, adhesion promoters, fillers, nucleating agents, rubbers, stabilizers, and processing aids.

Free radical initiators or crosslinking agents can include, by way of example, organic peroxides such as dialkyl organic peroxides. Example organic peroxides suitable for use include 1,1-di-t-butyl peroxy-3,3,5-trimethylcyclohexane, t-butyl-cumyl peroxide, dicumyl-peroxide, 2,5-dimethyl-2,5-di(tertiary-butyl-peroxyl)hexane, 1,3-bis(tertiary-butyl-peroxyl-isopropyl)benzene, or combinations of two or more thereof. Co-curing agents include trimethyl propane triacrylate (and similar compounds), N,N-m-phenylenedimaleimide, triallyl cyanurate, or combinations of two or more thereof. Activators can include activators for the blowing agent, and can include one or more metal oxides, metal salts, or organometallic complexes. Examples include ZnO, Zn stearate, MgO, or combinations of two or more thereof.

Embodiments of the polymer compositions may be produced by combining the components of the polymer composition under heat to form a melt. Combining the components may include mixing and blending the components using any technique known and used in the art, including Banbury, intensive mixers, two-roll mills, and extruders. Time, temperature, and shear rate can be regulated to ensure dispersion without premature crosslinking or foaming.

In some embodiments, combining the polyolefin elastomer, the E/X/Y polymer, and the epoxy-containing polymer may include melt-blending the polyolefin elastomer with the cross-linkable blend of the E/X/Y polymer and the epoxy-containing polymer. Melt-blending the polyolefin elastomer and the cross-linkable blend may occur at a temperature of from 100°C to 150°C. In embodiments, the melt-blended polyolefin elastomer and cross-linkable blend may then be cured at a temperature of rom 180°C to 240°C.

In some embodiments, combining the polyolefin elastomer, the E/X/Y polymer, and the epoxy-containing polymer may include melt-blending the polyolefin elastomer and the E/X/Y polymer to produce a blend, and subsequently melt-blending the epoxy-containing polymer with the blend. In embodiments, melt-blending the polyolefin elastomer and the E/X/Y polymer to produce a blend may occur at a temperature of from 180°C to 240°C. Subsequently melt-blending the epoxy-containing polymer with the blend may occur at a temperature of from 180°C to 240°C. The melt-blended epoxy-containing polymer with the blend may then be cured at a temperature of rom 180°C to 240°C.

Embodiments of the present disclosure may include an article comprising the polymer composition described herein. According to various embodiments, the polymer composition may be used to form a foam or molded article. For example, in embodiments, the polymer composition can be combined with additives used to control foam properties to form foams of various shapes. In some embodiments, the foam may be extruded, such as from a twin screw extruder, as is known to those of ordinary skill in the art.

Foaming agents (also referred to as blowing agents) used in the manufacture of foams can be physical foaming agents or chemical foaming agents. As used herein, "physical foaming agents" are low-boiling liquids, which volatilize under the curing conditions to form the blowing gas. Exemplary physical foaming agents include hydrocarbons, fluorocarbons, hydrofluorocarbons, hydrofluoroolefins, hydrochlorofluoroolefins, and other halogenated compounds. Other suitable chemical foaming agents can include, for example, sodium bicarbonate, ammonium bicarbonate, azodicarbonamide, dinitrosopentamethylenediamine, and sulfonyl hydrazides. Foaming agents such as water or carbon dioxide added as a gas or liquid, or generated in-situ by the reaction of water with polyisocyanate, may also be used. The foaming agents can be used in mixtures of two or more, and chemical and physical foaming agents can be used together to tailor expansion-decomposition temperature and foaming processes.

Foams formed from embodiments of the polymer compositions described herein may further include a free radical initiator or crosslinking agents, co-curing agents, an activator, and any other type of additive typically used in similar compositions, including pigments, adhesion promoters, fillers, nucleating agents, rubbers, stabilizers, and processing aids. Activators can include activators for the blowing agent, and can include one or more metal oxides, metal salts, or organometallic complexes. Examples include ZnO, Zn stearate, MgO, or combinations of two or more thereof. Free radical initiators or crosslinking agents can include, by way of example, organic peroxides such as dialkyl organic peroxides. Example organic peroxides suitable for use include 1,1-di-t-butyl peroxy-3,3,5-trimethylcyclohexane, t-butyl-cumyl peroxide, dicumyl-peroxide, 2,5-dimethyl-2,5-di(tertiary-butyl-peroxyl)hexane, 1,3-bis(tertiary-butyl-peroxyl-isopropyl)benzene, or combinations of two or more thereof. Co-curing agents include trimethyl propane triacrylate (and similar compounds), N,N-m-phenylenedimaleimide, triallyl cyanurate, or combinations of two or more thereof. Foams formed from embodiments of the polymer compositions described herein may further include from 0 wt.% to 10 wt.%, 0 wt.% to 8 wt.%, 0 wt.% to 6 wt.%, 0 wt.% to 4 wt.%, 0 wt.% to 2 wt.%, from 2 wt.% to 10 wt.%, 2 wt.% to 8 wt.%, 2 wt.% to 6 wt.%, 2 wt.% to 4 wt.%, from 4 wt.% to 10 wt.%, 4 wt.% to 8 wt.%, 4 wt.% to 6 wt.%, from 6 wt.% to 10 wt.%, 6 wt.% to 8 wt.%, from 8 wt.% to 10 wt.%, of the free radical initiator or crosslinking agents, based on the total weight of the polymer compositions used to produce embodiments of foams.

Embodiments of the polymer compositions described hereinabove may be utilized in foams, which may be produced by a number of methods, such as compression molding, injection molding, and hybrids of extrusion and molding. The process can include mixing the components of the polymer composition under heat to form a melt. The components may be mixed and blended using any of the methods described herein and any technique known and used in the art, including Banbury, intensive mixers, two-roll mills, and extruders. Time, temperature, and shear rate can be regulated to ensure dispersion without premature crosslinking or foaming.

After polymer composition, with any optional additives, has been mixed, shaping can be carried out. Sheeting

rolls or calendar rolls can be used to make appropriately dimensioned sheets for foaming. An extruder may be used to shape the composition into pellets.

Foaming can be carried out in a compression mold at a temperature and time to complete the decomposition of peroxides and blowing agents. Pressures, molding temperature, and heating time can be controlled. Foaming can be carried out using injection molding equipment by using pellets made from the foam composition. The resulting foam can be further shaped to the dimension of finished products by any means known and used in the art, including thermoforming and compression molding.

In various embodiments, the resulting foams formed from embodiments of the polymer compositions described herein can be substantially closed cell and useful for a variety of articles, e.g., footwear applications including midsoles or insoles.

In embodiments, foams formed from embodiments of the polymer compositions described herein may have a density of approximately 0.2 g/cc. In embodiments, foams formed from embodiments of the polymer compositions described herein may have a density of less than 0.2 g/cc or 0.15 g/cc.

The embodiments described herein may be further illustrated by the following examples.

## TEST METHODS

Unless otherwise stated, the following test methods are used.

### Density

Density is determined according to ASTM D792 and reported in grams per cubic centimeter (or g/cc).

### Melt Index

Melt indices $I_2$ (or I2) and $I_{10}$ (or I10) are determined according to ASTM D1238 at 190 °C at 2.16 kg and 10 kg loads, respectively. $I_2$ and $I_{10}$ are each reported in grams per ten minutes (or g/10 min).

### Tensile Properties

The tensile strength, tensile modulus and elongation at break were measured according to ASTM D1708. Micro-tensile bars were punched out of the compression molded plaques with a thickness of 1.5mm.

### Dynamic Mechanical Spectroscopy (DMS)

Dynamic oscillatory shear measurements are performed with the ARES system of TA Instruments (New Castle, Del.) at 190 °C using 25 mm parallel plates at a gap of 2.0 mm and at a constant strain of 10% under an inert nitrogen atmosphere. The frequency interval is from 0.03 to 300 radians/second at 5 points per decade logarithmically spaced. The stress response is analyzed in terms of amplitude and phase, from which the storage modulus (G'), loss modulus (G"), complex modulus (G*), tan δ, phase angle δ and complex viscosity (η*) are calculated. The complex modulus, G*, is a complex number with G' as its real and G" as its imaginary components, respectively (G*=G'+iG"). The magnitude of G* is reported as $|G^*|=(G'^2+G''^2)^{1/2}$. Both tan δ and the phase angle δ are related to the material's relative elasticity. Tan δ is the ratio of the loss modulus to the storage modulus, that is tan δ = G"/G', and the phase angle δ can be obtained from $\delta = \tan^{-1}(G''/G')$. The complex viscosity η* is also a complex number with η' as its real and η" as its imaginary components. The magnitude of η* is reported as:

$$\eta^* = (\eta''^2 + \eta'^2) = \left[\left(\frac{G''}{\omega}\right)^2 + \left(\frac{G'}{\omega}\right)^2\right]^{1/2},$$

where ω is the angular frequency in radians/second.

### Mooney Viscosity

Mooney Viscosity ($ML_{1+4}$) is determined according to ASTM D1646, with a one minute preheat time and a four minutes rotor operation time. The instrument was an Alpha Technologies Mooney Viscometer 2000.

## EXAMPLES

### *Example 1 - Samples 1-5*

The materials used to produce Samples 1-5 included INFUSE™ 9507 (polyolefin elastomer), commercially available from The Dow Chemical Company; NORDEL™ 6565 XFC EPDM (polyolefin elastomer), commercially available from The Dow Chemical Company; an epoxy-containing polymer (E/5.25 wt.% GMA/28 wt.% nBA, with melt index of 12 g/10 min) and an E/X/Y polymer (E/6.2 wt.% AA/28 wt.% nBA, with melt index of 60 g/10 min). The epoxy-containing polymer and the E/X/Y polymer of this Example were prepared by standard free-radical copolymerization methods, using high pressure, operating in a continuous manner. Monomers were fed into the reaction mixture in a proportion which relates to the monomer's reactivity, and the amount desired to be incorporated. In this way, uniform, near-random distribution of monomer units along the chain is achieved. Polymerization in this manner is well known, and is described in U.S. Pat. No. 4.351.931 (Armitage). Other polymerization techniques are described in U.S. Pat. No. 5,028,674 (Hatch et al.) and U.S. Pat. No. 5,057,593 (Statz).

To produce Samples 1-5, the polyolefin elastomer was mixed with the E/X/Y polymer using Haake Bowl mixing at a temperature of 220°C, then the epoxy-containing polymer was added, and the blend was cured. The amounts of each component used to produce the compositions of Samples 1-5 are provided in Table 1.

**Table 1: Composition of Samples 1-5.**

| Sample | Components |
|---|---|
| **Sample 1** | 9 wt.% epoxy-containing polymer<br>21 wt.% E/X/Y polymer<br>70 wt.% INFUSE™ 9507 |
| **Sample 2** | 18 wt.% epoxy-containing polymer<br>12 wt.% E/X/Y polymer<br>70 wt.% INFUSE™ 9507 |
| **Sample 3** | 12 wt.% epoxy-containing polymer<br>18 wt.% E/X/Y polymer<br>70 wt.% INFUSE™ 9507 |
| **Sample 4** | 6 wt.% epoxy-containing polymer<br>4 wt.% E/X/Y polymer<br>90 wt.% NORDEL™ 6565 XFC EPDM |
| **Sample 5** | 12 wt.% epoxy-containing polymer<br>8 wt.% E/X/Y polymer<br>80 wt.% NORDEL™ 6565 XFC EPDM |

### *Example 2 - Comparative Sample A*

Comparative Sample A was a polyolefin elastomer, INFUSE™ 9507 (100 wt.%), commercially available from The Dow Chemical Company.

### *Example 3 - Comparative Sample B*

Comparative Sample A was a polyolefin elastomer, NORDEL™ 6565 XFC EPDM (100 wt.%), commercially available from The Dow Chemical Company.

### *Example 4 - Comparative Sample C*

The materials used to produce Sample C were the INFUSE™ 9507 (polyolefin elastomer), commercially available from The Dow Chemical Company; the epoxy-containing polymer of Example 1; and the E/X/Y polymer of Example 1. To produce Comparative Sample C, the polyolefin elastomer was mixed with the E/X/Y polymer using Haake Bowl mixing at a temperature of 220°C, then the epoxy-containing polymer was added, and the blend was cured. The amounts of each component used to produce the compositions of Comparative Sample C are provided in Table 2.

**Table 2: Composition of Comparative Sample C.**

| Sample | Components |
|---|---|
| **Sample C** | 30 wt.% epoxy-containing polymer of Example 1<br>20 wt.% E/X/Y polymer of Example 1<br>50 wt.% INFUSE™ 9507 |

***Example 5 - Mechanical Properties of Comparative Sample A and Samples 1-3***

In Example 5, the tensile properties (tensile modulus, ultimate tensile strength, and tensile elongation) were measured for Comparative Sample A and Samples 1-3. The tensile testing and subsequent tensile properties analysis of the samples provided tensile strength and ultimate tensile strength data with correlation to ASTM D1708. The results of Example 3 are provided in Table 3.

**Table 3: Mechanical Properties of Comparative Sample A and Samples 1-3.**

| | Tensile Modulus (MPa) | Ultimate Tensile Strength (MPa) | Tensile Elongation (%) |
|---|---|---|---|
| **Comparative Sample A** | 199.0 | 360.0 | 1094 |
| **Sample 1** | 237.3 | 389.9 | 927 |
| **Sample 2** | 248.1 | 422.5 | 905 |
| **Sample 3** | 244.0 | 391.2 | 732 |

As shown in Table 3, each of Samples 1-3 showed improved or comparable tensile properties when compared to Comparative Sample A. Therefore, it was observed that polymer compositions that included polyolefin elastomer, E/X/Y polymer, and epoxy-containing polymer (Samples 1-3), provided for a blend that exhibits improved or comparable mechanical properties, when compared to a sample comprising 100% polyolefin elastomer.

***Example 6 - Melt Properties of Comparative Sample A and Samples 1-3***

In Example 6, the melt properties ($I_2$ and $I_{10}$) were measured for Comparative Sample A and Samples 1-3. The results of Example 6 are provided in Table 4.

**Table 4: Melt Properties of Comparative Sample A and Samples 1-3.**

| | $I_2$ (g/10min) | $I_{10}$ (g/10min) |
|---|---|---|
| **Epoxy-containing polymer of Example 1** | 12 | n/a |
| **E/X/Y polymer of Example 1** | 60 | n/a |
| **Comparative Sample A** | 5 | n/a |
| **Comparative Sample C** | No flow | N/A |
| **Sample 1** | 1.24 | 14.31 |
| **Sample 2** | 1.02 | 11.90 |
| **Sample 3** | 1.14 | 13.04 |

As shown in Table 4, each of Samples 1-3 exhibited a melt index $I_2$ of less than 5, showing that Samples 1-3 each had some cross-linking but were still thermoplastic. However, the melt index $I_2$ of Comparative Sample C, which included less than 55 wt.% of the polyolefin elastomer, could not be measured as there was no flow.

***Example 7 - Storage Modulus of Comparative Sample A and Samples 1-3***

In Example 7, the storage modulus at 0.1 rad/s, 1 rad/s, 10 rad/s, and 100 rad/s were measured for Comparative

Sample A and Samples 1-3. The results of Example 7 are provided in Table 5.

**Table 5: Storage Modulus of Comparative Sample A and Samples 1-3.**

| | Storage Modulus @ 0.1 rad/s (190°C, Pa) | Storage Modulus @ 1 rad/s (190°C, Pa) | Storage Modulus @ 10 rad/s (190°C, Pa) | Storage Modulus @ 100 rad/s (190°C, Pa) |
|---|---|---|---|---|
| **Comparative Sample A** | 3 | 72 | 2,745 | 38,772 |
| **Sample 1** | 3,669 | 6,030 | 18,510 | 77,798 |
| **Sample 2** | 4,463 | 7,698 | 24,114 | 102,247 |
| **Sample 3** | 5,306 | 8,318 | 22,590 | 88,494 |

As shown in Table 5, each of Samples 1-3 exhibited a higher modulus than Comparative Sample A. A higher modulus indicates a more elastic material, which is desirable for foam materials. Accordingly, Samples 1-3 may have more desirable properties for use in foams, as compared to Comparative Sample A.

***Example 8 - Shear Thinning of Comparative Sample A, Samples 1-3***

In Example 8, the shear thinning properties were measured for Comparative Sample A and Samples 1-3.

The shearing thinning data was obtained from DMS rheology. A constant temperature frequency sweep was performed using a TA Instruments "Advanced Rheometric Expansion System (ARES)," equipped with 25 mm (diameter) parallel plates, under a nitrogen purge. The sample was placed on the plate, and allowed to melt for five minutes at 190°C. The plates were then closed to a gap of "2 mm," the sample trimmed (extra sample that extends beyond the circumference of the "25 mm diameter" plate was removed), and then the test was started. The method had an additional five minute delay built in, to allow for temperature equilibrium. The experiments were performed at 190°C over a frequency range of 0.1 to 100 rad/s. Viscosity was calculated from these data. The results of Example 8 are provided in Table 6.

**Table 6: Shear Thinning of Comparative Sample A, Samples 1-3.**

| | Viscosity @ 0.1 rad/s (190°C, Pa·s) | Viscosity @ 1.0 rad/s (190°C, Pa·s) | Viscosity @ 10 rad/s (190°C, Pa·s) | Viscosity @ 100 rad/s (190°C, Pa·s) | Shear thinning ratio (Viscosity @ 0.1 rad/s to Viscosity @ 0.1 rad/s) |
|---|---|---|---|---|---|
| **Comparative Sample A** | 1,461 | 1,405 | 1,224 | 692 | 2.1 |
| **Sample 1** | 38,341 | 7,882 | 2,971 | 1,039 | 36.9 |
| **Sample 2** | 47,052 | 10,271 | 3,884 | 1,339 | 35.1 |
| **Sample 3** | 54,794 | 10,184 | 3,436 | 1,159 | 47.3 |

As shown in Table 6, each of Samples 1-3 exhibited a higher viscosity than Comparative Sample A. A higher viscosity may be desirable for foam manufacturing processes. Also samples 1-3 showed higher shear thinning characteristics (a higher shear thinning ratio ($\eta_{0.1}/\ \eta_{100}$)), indicating these samples had improved processability. Accordingly, Samples 1-3 may have more desirable processability properties for use in foams, as compared to Comparative Sample A.

***Example 9 - Melt Elasticity of Comparative Sample A and Samples 1-3***

In Example 9, the phase angles at 5,000 Pa, 8,000 Pa, 12,000 Pa, and 18,000 Pa were measured for Comparative Sample A and Samples 1-3. The results of Example 9 are provided in Table 7.

**Table 7: Melt Elasticity of Comparative Sample A, Samples 1-3.**

| | Phase angle @ Complex Modulus ~ 5,000 Pa | Phase angle @ Complex Modulus ~ 8,000 Pa | Phase angle @ Complex Modulus ~ 12,000 Pa | Phase angle @ Complex Modulus ~ 18,000 Pa |
|---|---|---|---|---|
| **Comparative Sample A** | 82.57 | 80.07 | 77.04 | 73.50 |
| **Sample 1** | 29.74 | 40.09 | 47.95 | 50.26 |
| **Sample 2** | 21.93 | 36.71 | 45.50 | 48.62 |
| **Sample 3** | 14.47 | 30.34 | 39.80 | 46.53 |

As shown in Table 7, each of Samples 1-3 exhibited a lower phase angle than Comparative Sample A. A lower phase angle indicates a more elastic material, which is desirable for foam materials. Accordingly, Samples 1-3 may have more desirable properties for use in foams, as compared to Comparative Sample A.

***Example 10 - Elasticity in Solid of Comparative Sample A and Samples 2-3***

In Example 10, the tan delta at 0.1 rad/s, 1 rad/s, 10 rad/s, and 100 rad/s at 25°C were measured for Comparative Sample A and Samples 2-3.

The elasticity in solid was measured by the DMS analysis described herein at 25°C, where film samples with about 0.5mm thickness were prepared for the test.

**Table 8: Elasticity in Solid of Comparative Sample A, Samples 1-3.**

| | Tan Delta @ 0.1 rad/s (25°C) | Tan Delta @ 1 rad/s (25°C) | Tan Delta @ 10 rad/s (25°C) | Tan Delta @ 100 rad/s (25°C) |
|---|---|---|---|---|
| **Comparative Sample A** | **0.161** | **0.142** | **0.121** | **0.093** |
| **Sample 2** | **0.101** | **0.092** | **0.082** | **0.077** |
| **Sample 3** | **0.101** | **0.097** | **0.092** | **0.090** |

As shown in Table 7, each of Samples 2-3 exhibited lower tan delta, indicating higher elasticity in a solid when compared to Comparative Sample A.

***Example 11 - Viscosity of Comparative Sample B and Samples 4-5***

In Example 11, the Mooney viscosity, complex viscosity at 0.1 rad/s and 100 rad/s, rheology ratio, and phase angle were measured for Comparative Sample B and Samples 2-3.

To test these properties, a constant temperature frequency sweep was performed using a TA Instruments "Advanced Rheometric Expansion System (ARES)," equipped with 25 mm (diameter) parallel plates, under a nitrogen purge. The sample was placed on the plate, and allowed to melt for five minutes at 125°C. The plates were then closed to a gap of "2 mm," the sample trimmed (extra sample that extends beyond the circumference of the "25 mm diameter" plate was removed), and then the test was started. The method had an additional five minute delay built in, to allow for temperature equilibrium. The experiments were performed at 125°C over a frequency range of 0.1 to 100 rad/s. The strain amplitude was constant at 10%. The complex viscosity $\eta^*$, tan ($\delta$) or tan delta, viscosity at 0.1 rad/s (V0.1), the viscosity at 100 rad/s (V100), and the viscosity ratio (V0.1/V100) were calculated from these data. Mooney Viscosity ($ML_{1+4}$) was determined according to ASTM D1646. The results of Example 11 are provided in Table 9.

**Table 9: Viscosity of Comparative Sample B, Samples 1-3.**

| | Mooney Viscosity ($ML_{1+4}$) @ 125°C, MU | Complex Viscosity @ 0.1 1/s, 125°C (kPa) | Complex Viscosity @ 100 1/s, 125°C (kPa) | Viscosity Ratio $n_{0.1}/n_{100}$ @ 125°C | Phase Angle, deg, @ G*=100 kPa, 125°C |
|---|---|---|---|---|---|
| **Comparative Sample B** | 64.1 | 350.0 | 5.3 | 66.3 | 40 |
| **Sample 4** | 71.8 | 474.2 | 5.2 | 91.6 | 37 |
| **Sample 5** | 79.7 | 594.7 | 5.4 | 110.9 | 33 |

As shown in Table 9, each of Samples 4-5 exhibited improved Mooney Viscosity, shear thinning and melt elasticity (reduced phase angle) characteristics when compared to Comparative Sample B.

## Claims

1. A polymer composition comprising:

   at least 55 wt.%, based on the total weight of the polymer composition, of a polyolefin elastomer having an ethylene content of from greater than 50 wt.% to less than 80 wt.%;
   a cross-linkable blend comprising:

   (i) from 1 wt.% to 99 wt.%, based on the total weight of the cross-linkable blend, of an E/X/Y polymer, wherein:

   E is ethylene monomer;
   X is a monomer selected from the group consisting of a $C_3$ to $C_8$ unsaturated carboxylic acids, esters of $C_3$ to $C_8$ unsaturated carboxylic acids, and anhydrides of $C_3$ to $C_8$ unsaturated carboxylic acids, wherein X is present in an amount of from about 2 wt.% to about 30 wt.%, based on the total amount of monomers present in the E/X/Y polymer; and
   Y is an alkyl (meth)acrylate monomer, wherein Y is present in an amount of from 0 wt.% to 40 wt.%, based on the total amount of monomers present in the E/X/Y polymer; and

   (ii) from 1 wt.% to 99 wt.%, based on the total weight of the cross-linkable blend, of an epoxy-containing polymer comprising:

   copolymerized monomers of ethylene,
   from about 3 wt.% to 15 wt.%, based on the total amount of monomers present in the epoxy-containing polymer, of a monomer containing one or more epoxy groups, and
   from 0 wt.% to 40 wt.%, based on the total amount of monomers present in the epoxy-containing polymer, of an alkyl meth(acrylate) monomer.

2. The polymer composition of claim 1, wherein the polyolefin elastomer comprises an ethylene-based polymer having a density of less than 0.900 g/cc when measured according to ASTM D792.

3. The polymer composition of any preceding claim, wherein the polyolefin elastomer comprises less than 80 wt.% of ethylene monomer units, based on the total weight of the polyolefin elastomer.

4. The polymer composition of any preceding claim, wherein the polymer composition has a melt flow index ($I_2$) of less than 5 grams per ten minutes (g/10 min) when measured according to according to ASTM D1238 at 190°C, 2.16 kg.

5. The polymer composition of any preceding claim, wherein the E/X/Y polymer comprises from 5 wt.% to 30 wt.% of alkyl meth(acrylate) monomer.

6. The polymer composition of any preceding claim, wherein the epoxy-containing polymer comprises from 5 wt.% to 30 wt.% of alkyl meth(acrylate) monomer.

7. The polymer composition of any preceding claim, wherein the X monomer of the E/X/Y polymer is cross-linked with the one or more epoxy groups of the epoxy-containing polymer.

8. The polymer composition of any preceding claim, comprising from 1 wt.% to 45 wt.%, based on the total weight of the polymer composition, of the cross-linkable blend.

9. The polymer composition of any preceding claim, comprising from 55 wt.% to 99 wt.% of the polyolefin elastomer, based on the total weight of the polymer composition.

10. The polymer composition of any preceding claim, wherein the cross-linkable blend is cross-linked.

11. A method of making the polymer composition of any of claims 1-10, the method comprising:
combining the polyolefin elastomer, the E/X/Y polymer, and the epoxy-containing polymer to produce the polymer composition.

12. The method of claim 11, wherein combining the polyolefin elastomer, the E/X/Y polymer, and the epoxy-containing polymer comprises:
melt-blending the polyolefin elastomer with the cross-linkable blend of the E/X/Y polymer and the epoxy-containing polymer.

13. The method of claim 11, wherein combining the polyolefin elastomer, the E/X/Y polymer, and the epoxy-containing polymer comprises:

melt-blending the polyolefin elastomer and the E/X/Y polymer to produce a blend, and
subsequently melt-blending the epoxy-containing polymer with the blend.

14. An article comprising the polymer composition of any of claims 1-10.

15. The article of claim 14, wherein the article is a foam.

**Patentansprüche**

1. Polymerzusammensetzung, umfassend:

mindestens zu 55 Gew.-%, basierend auf dem Gesamtgewicht der Polymerzusammensetzung, ein Polyolefinelastomer, das einen Ethylengehalt von mehr als 50 Gew.-% bis weniger als 80 Gew.-% aufweist;
eine vernetzbare Mischung, umfassend:

(i) von zu 1 Gew.-% bis zu 99 Gew.-%, basierend auf dem Gesamtgewicht der vernetzbaren Mischung, ein E/X/Y-Polymer, wobei:

E Ethylenmonomer ist;
X ein Monomer ist, das aus der Gruppe ausgewählt ist, bestehend aus ungesättigten $C_3$- bis $C_8$-Carbonsäuren, Estern von ungesättigten $C_3$- bis $C_8$-Carbonsäuren und Anhydriden von ungesättigten $C_3$- bis $C_8$-Carbonsäuren, wobei X in einer Menge von zu etwa 2 Gew.-% bis zu etwa 30 Gew.-% vorhanden ist, basierend auf der Gesamtmenge an Monomeren, die in dem E/X/Y-Polymer vorhanden sind; und
Y ein Alkyl(meth)acrylatmonomer ist, wobei Y in einer Menge von zu 0 Gew.-% bis zu 40 Gew.-% vorhanden ist, basierend auf der Gesamtmenge an Monomeren, die in dem E/X/Y-Polymer vorhanden sind; und

(ii) von zu 1 Gew.-% bis 99 Gew.-%, basierend auf dem Gesamtgewicht der vernetzbaren Mischung, ein epoxidhaltiges Polymer, umfassend:

copolymerisierte Monomere von Ethylen,
von zu etwa 3 Gew.-% bis zu 15 Gew.-%, basierend auf der Gesamtmenge an Monomeren, die in dem epoxidhaltigen Polymer vorhanden sind, ein Monomer, das eine oder mehrere Epoxidgruppen enthält, und

von zu 0 Gew.-% bis zu 40 Gew.-%, basierend auf der Gesamtmenge an Monomeren, die in dem epoxidhaltigen Polymer vorhanden sind, ein Alkylmeth(acrylat)monomer.

**2.** Polymerzusammensetzung nach Anspruch 1, wobei das Polyolefinelastomer ein ethylenbasiertes Polymer ist, das eine Dichte von weniger als 0,900 $g/cm^3$ aufweist, wenn gemäß ASTM D792 gemessen.

**3.** Polymerzusammensetzung nach einem der vorstehenden Ansprüche, wobei das Polyolefinelastomer zu weniger als 80 Gew.-% Ethylenmonomereinheiten umfasst, basierend auf dem Gesamtgewicht des Polyolefinelastomers.

**4.** Polymerzusammensetzung nach einem der vorstehenden Ansprüche, wobei die Polymerzusammensetzung einen Schmelzflussindex ($I_2$) von weniger als 5 Gramm pro zehn Minuten (g/10 min) aufweist, wenn gemäß ASTM D1238 bei 190 °C, 2,16 kg gemessen.

**5.** Polymerzusammensetzung nach einem der vorstehenden Ansprüche, wobei das E/X/Y-Polymer von zu 5 Gew.-% bis zu 30 Gew.-% Alkylmeth(acrylat)monomer umfasst.

**6.** Polymerzusammensetzung nach einem der vorstehenden Ansprüche, wobei das epoxidhaltige Polymer von zu 5 Gew.-% bis zu 30 Gew.-% Alkylmeth(acrylat)monomer umfasst.

**7.** Polymerzusammensetzung nach einem der vorstehenden Ansprüche, wobei das X-Monomer des E/X/Y-Polymers mit der einen oder den mehreren Epoxidgruppen des epoxidhaltigen Polymers vernetzt ist.

**8.** Polymerzusammensetzung nach einem der vorstehenden Ansprüche, umfassend von zu 1 Gew.-% bis zu 45 Gew.-%, basierend auf dem Gesamtgewicht der Polymerzusammensetzung, die vernetzbare Mischung.

**9.** Polymerzusammensetzung nach einem der vorstehenden Ansprüche, umfassend von zu 55 Gew.-% bis zu 99 Gew.-% das Polyolefinelastomer, basierend auf dem Gesamtgewicht der Polymerzusammensetzung.

**10.** Polymerzusammensetzung nach einem der vorstehenden Ansprüche, wobei die vernetzbare Mischung vernetzt ist.

**11.** Verfahren zum Herstellen der Polymerzusammensetzung nach einem der Ansprüche 1 bis 10, das Verfahren umfassend:
Kombinieren des Polyolefinelastomers, des E/X/Y-Polymers und des epoxidhaltigen Polymers, um die Polymerzusammensetzung zu produzieren.

**12.** Verfahren nach Anspruch 11, wobei das Kombinieren des Polyolefinelastomers, des E/X/Y-Polymers und des epoxidhaltigen Polymers umfasst:
Schmelzmischen des Polyolefinelastomers mit der vernetzbaren Mischung aus dem E/X/Y-Polymer und dem epoxidhaltigen Polymer.

**13.** Verfahren nach Anspruch 11, wobei das Kombinieren des Polyolefinelastomers, des E/X/Y-Polymers und des epoxidhaltigen Polymers umfasst:
Schmelzmischen des Polyolefinelastomers und des E/X/Y-Polymers, um eine Mischung zu produzieren, und anschließendes Schmelzmischen des epoxidhaltigen Polymers mit der Mischung.

**14.** Erzeugnis, umfassend die Polymerzusammensetzung nach einem der Ansprüche 1 bis 10.

**15.** Erzeugnis nach Anspruch 14, wobei das Erzeugnis ein Schaumstoff ist.

## Revendications

**1.** Composition polymère comprenant :

au moins 55 % en poids, en fonction du poids total de la composition polymère, d’un élastomère polyoléfinique ayant une teneur en éthylène allant de plus de 50 % en poids à moins de 80 % en poids ;
un mélange réticulable comprenant :

(i) de 1 % en poids à 99 % en poids, en fonction du poids total du mélange réticulable, d'un polymère E/X/Y, dans laquelle :

E est un monomère éthylène ;
X est un monomère choisi dans le groupe constitué par des acides carboxyliques insaturés en $C_3$ à $C_8$, des esters d'acides carboxyliques insaturés en $C_3$ à $C_8$ et des anhydrides d'acides carboxyliques insaturés en $C_3$ à $C_8$, dans laquelle X est présent en une quantité d'environ 2 % en poids à environ 30 % en poids, en fonction de la quantité totale de monomères présents dans le polymère E/X/Y ; et
Y est un monomère (méth)acrylate d'alkyle, dans laquelle Y est présent en une quantité allant de 0 % en poids à 40 % en poids, en fonction de la quantité totale de monomères présents dans le polymère E/X/Y ; et

(ii) de 1 % en poids à 99 % en poids, en fonction du poids total du mélange réticulable, d'un polymère contenant de l'époxy comprenant :

des monomères copolymérisés d'éthylène,
d'environ 3 % en poids à 15 % en poids, en fonction de la quantité totale de monomères présents dans le polymère contenant de l'époxy, d'un monomère contenant un ou plusieurs groupes époxy, et
de 0 % en poids à 40 % en poids, en fonction de la quantité totale de monomères présents dans le polymère contenant de l'époxy, d'un monomère méth(acrylate) d'alkyle.

**2.** Composition polymère selon la revendication 1, dans laquelle l'élastomère polyoléfinique comprend un polymère à base d'éthylène ayant une masse volumique inférieure à 0,900 g/$cm^3$ lorsqu'on mesure selon ASTM D792.

**3.** Composition polymère selon l'une quelconque revendication précédente, dans laquelle l'élastomère polyoléfinique comprend moins de 80 % en poids de motifs monomères éthylène, en fonction du poids total de l'élastomère polyoléfinique.

**4.** Composition polymère selon l'une quelconque revendication précédente, dans laquelle la composition polymère a un indice d'écoulement à l'état fondu ($I_2$) inférieur à 5 grammes par dix minutes (g/10 min) lorsqu'on mesure selon ASTM D1238 à 190 °C, 2,16 kg.

**5.** Composition polymère selon l'une quelconque revendication précédente, dans laquelle le polymère E/X/Y comprend de 5 % en poids à 30 % en poids de monomère méth(acrylate) d'alkyle.

**6.** Composition polymère selon l'une quelconque revendication précédente, dans laquelle le polymère contenant de l'époxy comprend de 5 % en poids à 30 % en poids de monomère méth(acrylate) d'alkyle.

**7.** Composition polymère selon l'une quelconque revendication précédente, dans laquelle le monomère X du polymère E/X/Y est réticulé avec le ou les groupes époxy du polymère contenant de l'époxy.

**8.** Composition polymère selon l'une quelconque revendication précédente, comprenant de 1 % en poids à 45 % en poids, en fonction du poids total de la composition polymère, du mélange réticulable.

**9.** Composition polymère selon l'une quelconque revendication précédente, comprenant de 55 % en poids à 99 % en poids de l'élastomère polyoléfinique, en fonction du poids total de la composition polymère.

**10.** Composition polymère selon l'une quelconque revendication précédente, dans laquelle le mélange réticulable est réticulé.

**11.** Procédé de fabrication de la composition polymère selon l'une quelconque des revendications 1 à 10, le procédé comprenant :
la combinaison de l'élastomère polyoléfinique, du polymère E/X/Y et du polymère contenant de l'époxy pour produire la composition polymère.

**12.** Procédé selon la revendication 11, dans laquelle la combinaison de l'élastomère polyoléfinique, du polymère E/X/Y et du polymère contenant de l'époxy comprend :
le mélangeage en fusion de l'élastomère polyoléfinique avec le mélange réticulable du polymère E/X/Y et le polymère

contenant de l'époxy.

13. Procédé selon la revendication 11, dans laquelle la combinaison de l'élastomère polyoléfinique, du polymère E/X/Y et du polymère contenant de l'époxy comprend :
le mélangeage en fusion de l'élastomère polyoléfinique et du polymère E/X/Y pour produire un mélange, et le mélangeage en fusion ultérieur du polymère contenant de l'époxy avec le mélange.

14. Article comprenant la composition polymère selon l'une quelconque des revendications 1 à 10.

15. Article selon la revendication 14, dans lequel l'article est une mousse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63007034
- US 7498282 B
- US 2897183 A
- US 4351931 A, Armitage
- US 5028674 A, Hatch
- US 5057593 A, Statz